# EUROPÄISCHE PATENTSCHRIFT

(11) **EP 2 156 983 B1**
(45) Veröffentlichungstag und Bekanntmachung des Hinweises auf die Patenterteilung: **20.06.2012**
(21) Anmeldenummer: 09165945.8
(22) Anmeldetag: 21.07.2009
(51) Int. Cl.: B60Q 1/14

(54) **Verfahren und Vorrichtung zum Steuern der vertikalen Hell-Dunkel-Grenze bei Scheinwerfern**
Method and device for controlling the vertical cut-off line of headlamps
Procédé et dispositif de commande de la ligne de coupure verticale de phares

(30) Priorität: 20.08.2008 DE 102008038536
(43) Veröffentlichungstag der Anmeldung: 24.02.2010
(73) Patentinhaber: Hella KGaA Hueck & Co., 59552 Lippstadt (DE)
(72) Erfinder: Schwarz, Sergej, 70825, Korntal-Münchingen (DE); Beneke, Frank, 98574, Schmalkalden (DE)

(56) Entgegenhaltungen:
- EP-A- 0 869 031
- EP-A- 2 060 441
- EP-A- 2 060 442
- WO-A1-2009/112125
- DE-A1-102006 043 281
- DE-A1-102007 045 150
- JP-A- 2009 046 118
- US-A1- 2005 052 879
- US-A1- 2008 106 886

## Beschreibung

Die Erfindung betrifft eine Vorrichtung zum Steuern der vertikalen Hell-Dunkel-Grenze bei Scheinwerfern eines Kraftfahrzeugs.

Aus der Offenlegungsschrift mit der Veröffentlichungsnummer DE 21 44 197 ist ein Kraftfahrzeugscheinwerfer bekannt, bei dem die vertikalen Hell-Dunkel-Grenzen eingestellt werden können. Die vertikalen Hell-Dunkel-Grenzen wird durch den Scheinwerfer automatisch so eingestellt, dass eine Blendung des vorausfahrenden Verkehrs oder den entgegenkommenden Verkehrs möglichst vermieden wird. Dazu können die vertikale Hell-Dunkel-Grenzen des von dem Scheinwerfer abgestrahlten Lichts nach rechts oder links verschoben werden. Die Verschiebung der Hell-Dunkel-Grenzen erfolgt so, dass der linke Scheinwerfer des Fahrzeugs links an dem Objekt vorbei leuchtet, dessen Fahrer möglicherweise geblendet werden könnte. Entsprechend wird der rechte Scheinwerfers so eingestellt, dass das von diesem Scheinwerfer abgestrahlten Lichts rechts von dem Fahrzeug liegt, das entblendet wird. Dadurch entsteht vor dem Kraftfahrzeug ein unbeleuchteter Bereich, der Tunnel genannt wird, in dem sich das entblendete Fahrzeug befindet. Der Tunnel wird durch die linke bzw. rechte Hell-Dunkel-Grenze begrenzt.

Um ein automatisches Einstellen der vertikalen Hell-Dunkel-Grenzen der Scheinwerfer erreichen zu können, weist der Scheinwerfer ein Sensorsystem auf. Das Sensorsystem erkennt Lichtquellen des vorausfahrenden oder entgegenkommenden Fahrzeugs, d. h. entweder die Frontscheinwerfer oder aber die Rückleuchten des Fahrzeugs.

Weiterentwicklungen zu dem in der genannten Offenlegungsschrift DE 21 44 197 offenbarten Scheinwerfer sind Steuervorrichtungen für Scheinwerfer, die einen ersten Eingang für ein erstes Signal aufweisen. Dieses erste Signal gibt bezogen auf die Längsachse des Fahrzeugs eine Richtung an, in welcher dem Kraftfahrzeug eine Lichtquelle eines zweiten Fahrzeugs entgegenkommt oder sich von dem ersten Fahrzeug in gleicher Fahrtrichtung fortbewegt. Die Steuervorrichtung weist ein Mittel zum Erzeugen eines Stellsignals sowohl für den rechten Scheinwerfer als auch für den linken Scheinwerfer auf. Die Stellsignale dienen zum Einstellen der vertikalen Hell-Dunkel-Grenzen in Abhängigkeit von dem ersten Signal. Mit dem Mittel wird die rechte vertikale Hell-Dunkel-Grenze des Tunnels zum Entblenden eines entgegenkommenden oder vorausfahrenden zweiten Fahrzeugs verschoben. Ebenso wird die linke vertikale Hell-Dunkel-Grenze des Tunnels zum Entblenden eines entgegenkommenden oder vorausfahrenden zweiten Fahrzeugs verschoben.

Als Grundlage für die Ermittlung der vertikalen Hell-Dunkel-Grenzen dienen die über den ersten Eingang eingelesenen Objektwinkel, unter welchen das vorausfahrende oder entgegenkommende zweite Fahrzeug ermittelt wird. Es sei an dieser Stelle darauf hingewiesen werden, dass der Objektwinkel sich in der Regel nicht auf die Kontur des zweiten Fahrzeugs im Ganzen, sondern nur auf die Position der jeweils äußersten Lichtquelle des zweiten Fahrzeugs bezieht, die von einem Sensorsystem erkannt werden. Dieses ist bei entgegenkommenden Fahrzeugen der rechte oder linke Frontscheinwerfer und bei vorausfahrenden Fahrzeugen das rechte oder linke Rücklicht. Werden keine Kurven durchfahren, befindet sich der Fahrzeugführer in der Regel immer zwischen den beiden äußeren Lichtquellen des entgegenkommenden oder vorausfahrenden Fahrzeugs.

Dieses ist beim Durchfahren von Kurven jedoch nicht notwendigerweise der Fall. Insbesondere beim Durchfahren von Kurven mit sehr kleinen Radien können Situationen auftreten, in denen der Fahrzeugführer rechts von der rechten äußeren Lichtquelle des vorausfahrenden oder entgegenkommenden Fahrzeugs oder links von der linken äußeren Lichtquelle des Fahrzeugs ist. Er liegt dann innerhalb des Lichtkegels des rechten bzw. linken Scheinwerfers, d. h. links von der linken vertikalen Hell-Dunkel-Grenze bzw. rechts von der rechten vertikalen Hell-Dunkel-Grenze des Tunnels. Solche Situationen sind unerwünscht, da sie ein erhöhtes Risiko für beide Verkehrsteilnehmer darstellen.

Aus der Druckschrift DE 10 2007 045 150 A1 ist eine Steuervorrichtung bekannt, mit der die rechte und die linke vertikale Hell-Dunkel-Grenze des Tunnels eingestellt werden kann. Die Steuervorrichtung ist mit einem Fahrzeugbus verbunden, über welchen der Lenkwinkeleinschlag oder Daten, aus denen sich der gerade gefahrene Kurvenradius bestimmen lässt, an die Steuervorrichtung übertragen werden. In diesem Fall kann die Leuchtweite insgesamt mit kleiner werdendem Kurvenradius abgesenkt werden. Dadurch wird aber das Vorfeld des Fahrzeugs bei einer Kurvenfahrt insgesamt schlechter beleuchtet, wenn der Kurvenradius klein ist.

Der Erfindung liegt daher die Aufgabe zugrunde eine Steuervorrichtung zum Steuern der vertikalen Hell-Dunkel-Grenzen bei Scheinwerfern so zu verbessern, dass auch bei Kurvenfahrten eine Blendung weitgehend vermieden wird und gleichzeitig die Leuchtweite möglichst unverändert bleibt.

Diese Aufgabe wird erfindungsgemäß durch eine Steuervorrichtung mit den Merkmalen des Anspruchs 1 gelöst. Die erfindungsgemäße Steuervorrichtung weist einen zweiten Eingang für ein zweites Signal auf, welches den Radius einer von dem Kraftfahrzeug durchfahrenen oder zu durchfahrenden Kurve anzeigt und das Mittel zum Erzeugen der Stellsignale ist geeignet und eingerichtet, die Stellsignale in Abhängigkeit von dem zweiten Signal zu erzeugen. Das zweite Signal kann aus Sensorsignalen für den Lenkradeinschlagswinkel, dem Einschlagswinkel der Vorderräder, der Gierrate und/oder einer Information eines Navigationssystems oder Kamerasystems über den vor dem Kraftfahrzeug liegenden Straßenverlauf gewonnen werden.

Bei der Ermittlung der Stellsignale wird somit der Kurvenradius der von dem ersten Fahrzeug durchfahrenen oder zu durchfahrenden Kurve berücksichtigt. Bei der Ermittlung der Stellgrößen bzw. Stellsignale wird ein vom Kurvenradius der durchfahrenen oder zu durchfahrenden Kurve abhängigen Vorhalt berücksichtigt. Dieser Vorhalt führt dazu, dass die vertikalen Hell-Dunkel-Grenzen in Kurven immer so eingestellt sind, dass eine hohe Wahrscheinlichkeit besteht, dass Fahrzeugführer die sich bezogen auf eine Rechtskurve rechts von der rechten äußeren Lichtquelle des zweiten Fahrzeugs bzw. - bezogen auf eine Linkskurve - links von der linken äußeren Lichtquelle des zweiten Fahrzeugs befinden, nicht mehr geblendet werden. Der Vorhalt ist daher sinnvollerweise umso größer, je kleiner der Kurvenradius ist.

Eine erfindungsgemäße Steuervorrichtung kann so eingerichtet sein, dass das Mittel zum Erzeugen der Stellsignale für den rechten Scheinwerfer und/oder den linken Scheinwerfer in Abhängigkeit von dem ersten Signal, d. h. in Abhängigkeit von dem Objektwinkel, eine erste Zwischengröße erzeugt. Diese ersten Zwischengrößen können den Stellgrößen entsprechen, die bei herkömmlichen Steuervorrichtungen für Scheinwerfer mit adaptierbaren vertikalen Hell-Dunkel-Grenzen für die gegebenen Objektwinkel ermittelt werden.

Gemäß der Erfindung kann das Mittel zum Erzeugen der Stellsignale geeignet und eingerichtet sein, eine zweite Zwischengröße für den rechten Scheinwerfer und/oder für den linken Scheinwerfer in Abhängigkeit von dem zweiten Signal zu erzeugen. Diese zweite Zwischengröße kann dem Vorhalt entsprechen, der mit dem Winkel der vertikalen Hell-Dunkel-Grenze nach herkömmlicher Ermittlung summiert wird.

Das Mittel zum Erzeugen der Stellsignale einer erfindungsgemäßen Steuervorrichtung kann die Stellsignale in Abhängigkeit der ersten Zwischengröße und der zweiten Zwischengröße erzeugen. Beide Zwischengrößen können insbesondere mittels des Mittels zum Erzeugen addiert werden.

Beispielsweise kann das Mittel zum Erzeugen der Stellsignale den Vorhalt (δ) für den rechten bzw. linken Scheinwerfer (50 bzw. 40) folgendermaßen bestimmen:
- δ ∈ ]0°,2°]für R > 0 m (Rechtskurve) und α > 0°,
- δ ∈ [- 2°,0°[für R < 0 m (Linkskurve) und α < 0° und
- in allen übrigen Fällen δ=0
wobei R der durch das zweite Signal angegebene Kurvenradius und α der Objektwinkel ist und δ für den Vorhalt steht.

Anhand der beigefügten Zeichnungen wird die Erfindung nachfolgend näher erläutert. Dabei zeigt:
- Fig. 1: eine Draufsicht auf eine schematisch dargestellte Fahrsituation zweier einander folgender Fahrzeuge ohne Berücksichtigung der Erfindung,
- Fig. 2: die Fahrsituation aus Figur 1 mit Berücksichtigung der Erfindung,
- Fig. 3: eine Fahrsituation in Draufsicht mit zwei einander entgegenkommenden Fahrzeugen ohne Berücksichtigung der Erfindung,
- Fig. 4: die Fahrsituation gemäß Figur 3 mit Berücksichtigung der Erfindung,

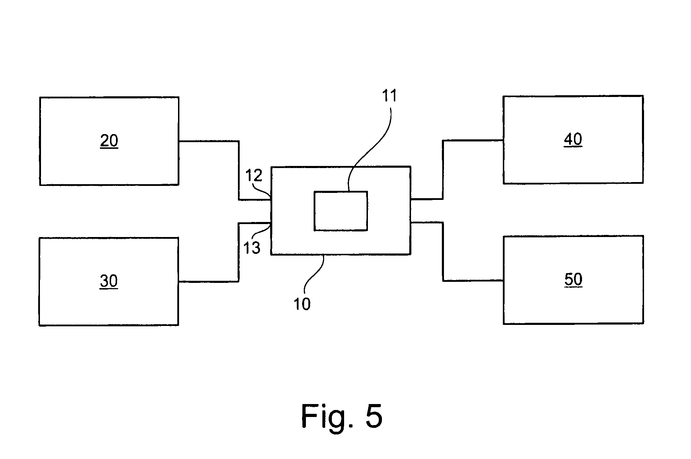

- Fig. 5: ein Blockschaltbild einer Anordnung mit einer erfindungsgemäßen Steuer- vorrichtung.

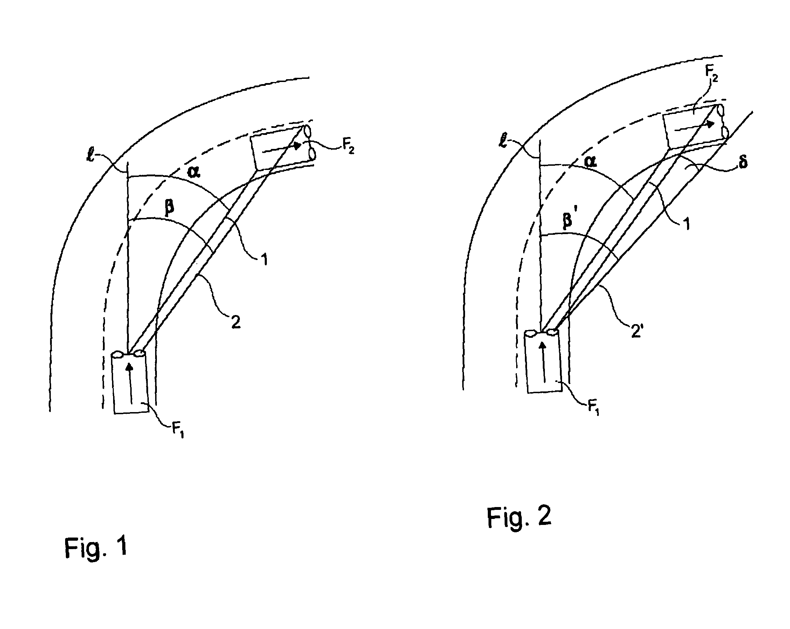

In der in der Figur 1 dargestellten Fahrsituation folgt ein erstes Kraftfahrzeug F₁ einem zweiten Kraftfahrzeug F₂ bei einer Kurvenfahrt durch eine Rechtskurve. Das erste Kraftfahrzeug ist mit Scheinwerfern ausgestattet, deren vertikalen Hell-Dunkel-Grenzen zum Entblenden des vorausfahrenden Kraftfahrzeugs F₂ verschoben werden können. Das erste Kraftfahrzeug F₁ weist dazu einen Sensor auf, mit welchem es den sogenannten Objektwinkel des zweiten Kraftfahrzeugs F₂ feststellen kann. Bei dem Sensor handelt es sich um ein Kamerasystem. Ausgehend von der Längsachse I des ersten Kraftfahrzeugs wird mittels des Kamerasystems der Objektwinkel α bestimmt, der sich auf die am weitesten außenliegende Lichtquelle des zweiten Fahrzeugs F₂ bezieht. Diese am äußersten liegende Lichtquelle des zweiten Fahrzeugs F₂ ist das rechte Rücklicht.

Durch das Verschieben der vertikalen Hell-Dunkel-Grenze bei entsprechend dem Objektwinkel α bzw. der Richtung 1 der äußersten Lichtquelle wird eine weitgehende Entblendung des vorausfahrenden zweiten Fahrzeugs F₂ erreicht.

Allerdings erfolgt keine vollständige Entblendung, wie sich aus der in der Figur 1 dargestellten Fahrsituation anschaulich ergibt. Die Verschiebung der vertikalen Hell-Dunkel-Grenze 2 um den Winkel β erfolgt rechnerisch aus dem Objektwinkel α bzw. der Richtung 1, unter welcher die äußerste, im Falle einer Rechtskurve rechte Lichtquelle durch das Kamerasystem erfasst wird. Rechts von dieser Lichtquelle, also jenseits der Richtung 1, kann je nach Konstruktion des Fahrzeugs der Sitzplatz des Kraftfahrzeugführers sein. Ebenfalls in Abhängigkeit von der Konstruktion des Fahrzeugs ist der rechte Außenspiegel des Kraftfahrzeugs angebracht. Sowohl der Fahrzeugführer des Fahrzeugs F₂ als auch der rechte Außenspiegel des zweiten Fahrzeugs F₂ sind somit wohlmöglich, - bezogen auf die Längsrichtung des ersten Fahrzeugs F₁-jenseits der Hell-Dunkel-Grenze 2. Dadurch kann es zu einer Blendung des Fahrzeugführers des zweiten Fahrzeugs F₂ kommen.

Durch die Erfindung wird eine derartige Blendung bei einer Kurvenfahrt vermieden. Dieses wird dadurch erreicht, dass bei einer Kurvenfahrt durch eine Rechtskurve auf die aufgrund des Objektwinkels α ermittelte vertikale Hell-Dunkel-Grenze 2 ein Vorhalt gegeben wird. Die Richtung der vertikalen Hell-Dunkel-Grenze 2 wird um den Vorhalt, in der Figur 2 als Winkel δ dargestellt, auf eine Richtung 2' verschoben. Die verschobene Hell-Dunkel-Grenze hat den Winkel β'. Diese Verschiebung auf die Richtung 2' hat zur Folge, dass der Fahrzeugführer des zweiten Fahrzeugs F₂ und ein Außenspiegel des zweiten Fahrzeugs F₂ bezogen auf die Längsrichtung I des ersten Fahrzeugs F₁ diesseits der vertikalen Hell-Dunkel-Grenze, innerhalb des sogenannten Tunnels liegen. Es erfolgt dadurch kein direkter Lichteinfall von dem rechten Scheinwerfer des ersten Fahrzeugs F₁ in den Außenspiegel oder auf den Sitzplatz des Fahrzeugführers des zweiten Fahrzeugs F₂. Eine Blendung des Fahrzeugführers des zweiten Fahrzeugs F₂ wird dadurch noch wirksamer vermieden.

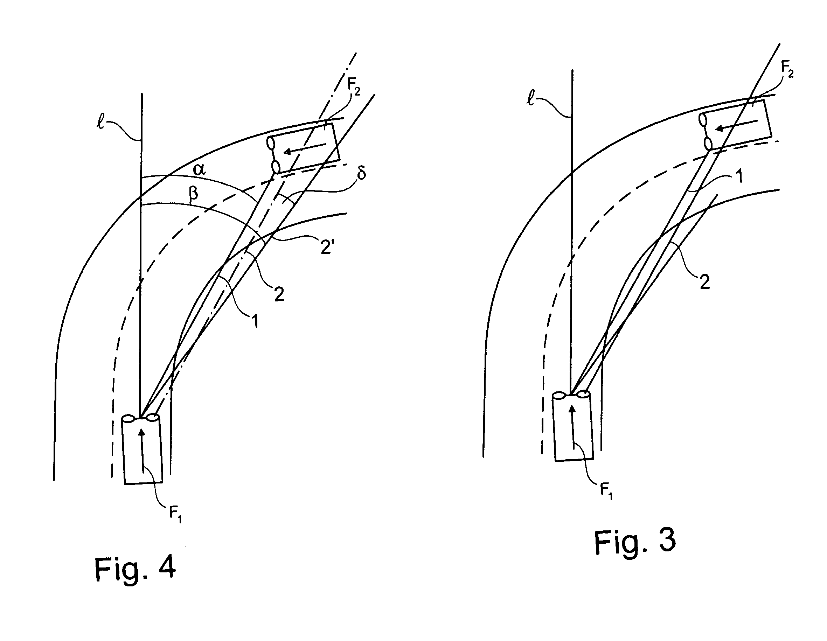

Eine ähnliche Situation ergibt sich, wenn, wie in Figur 3 dargestellt ist, dem ersten Kraftfahrzeug F₁ in einer Rechtskurve ein zweites Kraftfahrzeug F₂ entgegenkommt. In diesem Fall wird von dem Kamerasystem des ersten Kraftfahrzeugs F₁ als äußerste Lichtquelle der linke Frontscheinwerfer des zweiten Fahrzeugs F₂ unter dem Objektwinkel α erkannt.

Ist das erste Fahrzeug F₁ mit einer herkömmlichen Steuervorrichtung zum Einstellen der vertikalen Hell-Dunkel-Grenze ausgestattet, wird die vertikale Hell-Dunkel-Grenze auf die Richtung 2 verschoben und hat somit einen Winkel β bezogen auf die Längsrichtung I des ersten Fahrzeugs F₁. Ist der rechte Scheinwerfer des Fahrzeugs F₁ auf die Hell-Dunkel-Grenze 2 eingestellt, kann eine Blendung eines Fahrzeugführers, der sich rechts von der Hell-Dunkel-Grenze 2 befindet nicht vermieden werden. Erfindungsgemäß wird daher, wie in Figur 4 dargestellt, in Abhängigkeit von dem Kurvenradius der durchfahrenen Rechtskurve ein Vorhalt zu der Richtung der vertikalen Hell-Dunkel-Grenze 2 nach herkömmlicher Ermittlung hinzugerechnet. Dieses führt zu einer vertikalen Hell-Dunkel-Grenze 2', die um den Winkel δ weiter nach rechts verschoben ist, als die Hell-Dunkel-Grenze 2 nach herkömmlicher Ermittlung. Der Kraftfahrzeugführer befindet sich dann links von der Hell-Dunkel-Grenze nach erfindungsgemäßer Berechnung. Damit ist eine Blendung des Kraftfahrzeugführers durch den rechten Scheinwerfer des ersten Fahrzeugs F₁ vermieden.

Das Fahrzeug F₁, das mit einer erfindungsgemäßen Steuervorrichtung ausgestattet ist, weist die erfindungsgemäße Steuervorrichtung 10 mit dem Mittel zum Erzeugen eines Stellsignals für den rechten Scheinwerfer bzw. eines Stellsignals für den linken Scheinwerfer auf. Die Steuervorrichtung weist einen ersten Eingang 12 für Signale eines Kamerasystems 20 und einen zweiten Eingang 13 für eine Vorrichtung 30 zum Ermitteln des Kurvenradius der durchfahrenen Kurve auf. Über den ersten Eingang 12 wird das Signal für den Objektwinkel und über den zweiten Eingang 13 ein Signal für den Kurvenradius in die Steuervorrichtung 10 eingelesen. Die von dem Mittel 11 zum Erzeugen der Stellsignale erzeugten Stellsignale werden über Ausgänge der Steuervorrichtung 10 an den linken Scheinwerfer 40 bzw. den rechten Scheinwerfer 50 gegeben. In den Scheinwerfern 40, 50 werden die Stellsignale durch Stellmotoren oder dergleichen zum Einstellen der vertikalen Hell-Dunkel-Grenzen benutzt.

### Bezugszeichenliste

- F₁: Kraftfahrzeug
- F₂: vorausfahrendes Fahrzeug
- I: Längsachse
- α: Objektwinkel
- β: Winkel der Hell-Dunkel-Grenze
- β': verschobener Winkel der Hell-Dunkel-Grenze
- δ: Vorhalt
- 1: Objektrichtung
- 2: Hell-Dunkel-Grenze
- 10: Steuervorrichtung
- 11: Mittel zum Erzeugen eines Stellsignals
- 12: erster Eingang
- 13: zweiter Eingang
- 20: Kamerasystem
- 30: Vorrichtung zum Ermitteln des Kurvenradius
- 40: linker Scheinwerfer
- 50: rechter Scheinwerfer

## Patentansprüche

1. Vorrichtung (10) zum Steuern der vertikalen Hell-Dunkel-Grenze bei Scheinwerfern (40, 50) eines Kraftfahrzeugs (F₁), wobei
- die Steuervorrichtung (10) einen ersten Eingang (12) für ein erstes Signal aufweist, welches die auf eine Längsachse (I) des Kraftfahrzeugs bezogenen Richtung angibt, in welcher dem Kraftfahrzeug (F₁) eine Lichtquelle eines Fahrzeugs (F₂) entgegenkommt oder sich vor dem Kraftfahrzeug (F₁) in gleicher Fahrtrichtung fortbewegt,
- die Steuervorrichtung (10) ein Mittel (11) zum Erzeugen eines Stellsignals für den rechten Scheinwerfer (50) und eines Stellsignals für den linken Scheinwerfer (40) des Fahrzeugs (F₁) zum Einstellen der vertikalen Hell-Dunkel-Grenzen in Abhängigkeit von dem ersten Signal aufweist,
- mit welchem die rechte vertikale Hell-Dunkel-Grenze zum Entblenden eines entgegenkommenden oder vorausfahrenden Fahrzeugs (F₂) verschoben werden kann und
- mit welchem die linke vertikale Hell-Dunkel-Grenze zum Entblenden eines entgegenkommenden oder vorausfahrenden Fahrzeugs (F₂) verschoben werden kann,
- wobei die Steuervorrichtung (10) einen zweiten Eingang (13) für ein zweites Signal aufweist, welches den Radius einer von dem Kraftfahrzeug durchfahrenen oder zu durchfahrenden Kurve anzeigt,
**dadurch gekennzeichnet,**
- **dass** das Mittel (11) zum Erzeugen der Stellsignale zum Einstellen der vertikalen Hell-Dunkel-Grenzen geeignet und eingerichtet ist, die Stellsignale in Abhängigkeit von dem zweiten Signal zu erzeugen,
- wobei das Mittel (11) zum Erzeugen der Stellsignale bei der Erzeugung der Stellsignale einen vom Kurvenradius der durchfahrenen oder zu durchfahrenden Kurve abhängigen Vorhalt (δ) berücksichtigt.

2. Steuervorrichtung (10) nach Anspruch 1, **dadurch gekennzeichnet, dass** das Mittel (11) zum Erzeugen der Stellsignale geeignet und eingerichtet ist, eine erste Zwischengröße (β) für den rechten Scheinwerfer (50) und eine erste Zwischengröße für den linken Scheinwerfer (40) in Abhängigkeit von dem ersten Signal zu erzeugen.

3. Steuervorrichtung (10) nach Anspruch 2, **dadurch gekennzeichnet, dass** das Mittel (11) zum Erzeugen der Stellsignale geeignet und eingerichtet ist, die Stellsignale in Abhängigkeit der ersten Zwischengrößen (β) und des Vorhalts (δ) zu erzeugen.

4. Steuervorrichtung (10) nach Anspruch 3, **dadurch gekennzeichnet, dass** das Mittel (11) zum Erzeugen der Stellsignale zum Addieren der ersten Zwischengrößen (β) und des Vorhalts (δ) geeignet und eingerichtet ist.

5. Steuervorrichtung (10) nach einem der Ansprüche 1 bis 4, **dadurch gekennzeichnet, dass** das Mittel (11) zum Erzeugen der Stellsignale den Vorhalt (δ) für den rechten bzw. linken Scheinwerfer (50 bzw. 40) folgendermaßen bestimmt:
- δ ∈ ]0°,2°] für R > 0 m (Rechtskurve) und α > 0°,
- δ δ[-2°,0°[ für R < 0 m (Linkskurve) und α < 0° und
- in allen übrigen Fällen δ = 0
wobei R der durch das zweite Signal angegebene Kurvenradius und α der Objektwinkel ist und δ für den Vorhalt steht.

6. Verfahren zum Steuern der vertikalen Hell-Dunkel-Grenze bei Scheinwerfern (40, 50) eines Kraftfahrzeugs (F₁), insbesondere mit einer Vorrichtung (10) nach einem der Ansprüche 1 bis 5, wobei
- die Steuervorrichtung (10) über einen ersten Eingang (12) ein erstes Signal einliest, welches die auf eine Längsachse (I) des Kraftfahrzeugs (F₁) bezogenen Richtung angibt, unter welcher dem Kraftfahrzeug (F₁) eine Lichtquelle entgegenkommt oder sich vor dem Kraftfahrzeug (F₁) in gleicher Fahrtrichtung fortbewegt,
- ein Mittel (11) zum Erzeugen von Stellsignalen der Steuervorrichtung (10) ein Stellsignal für den rechten Scheinwerfer (50) und ein Stellsignal für den linken Scheinwerfer (40) des Fahrzeugs in Abhängigkeit von dem ersten Signal erzeugt,
- mit welchem die rechte vertikale Hell-Dunkel-Grenze zum Entblenden eines entgegenkommenden oder vorausfahrenden Fahrzeugs (F₂) verschoben werden kann und
- mit welchem die linke vertikale Hell-Dunkel-Grenze zum Entblenden eines entgegenkommenden oder vorausfahrenden Fahrzeugs (F₂) verschoben werden kann,
- wobei die Steuervorrichtung (10) über einen zweiten Eingang (13) ein zweites Signal einliest, welches den Radius einer von dem Kraftfahrzeug (F₁) durchfahrenen oder zu durchfahrenden Kurve anzeigt,
**gekennzeichnet dadurch,**
- **dass** das Mittel (11) zum Erzeugen der Stellsignale die Stellsignale auch in Abhängigkeit von dem zweiten Signal erzeugt.
- wobei das Mittel (11) zum Erzeugen der Stellsignale bei der Erzeugung der Stellsignale einen vom Kurvenradius der durchfahrenen oder zu durchfahrenden Kurve abhängigen Vorhalt (δ) berücksichtigt.

## Claims

1. Fixture (10) for controlling the vertical cut-off line in headlamps (40, 50) of a motor vehicle (F₁) wherein
- the control device (10) has a first input (12) for a first signal indicating the direction relating to a longitudinal axis (I) of the motor vehicle, under which the motor vehicle (F₁) is approached by an oncoming light-source of a second vehicle (F₂) or this light-source moves in front of and away from the motor vehicle (F₁) in the same direction of travel,
- the control device (10) has a means (11) for creating an actuating signal for the right hand headlamp (50) and an actuating signal for the left hand headlamp (40) of the vehicle (F₁) for setting the vertical cut-off lines depending on the first signal,
- by means of which the right hand vertical cut-off line may be moved to avoid dazzling the oncoming vehicle or the vehicle moving in front (F₂) and
- by means of which the left hand vertical cut-off line may be moved to avoid dazzling the oncoming vehicle or the vehicle moving in front (F₂),
- wherein the control device (10) has a second input (13) for a second signal indicating the radius of a curve the motor vehicle has already driven through or will drive through,
**characterized in**
- **that** the means (11) for creating the actuating signals for the adjustment of the vertical cut-off lines is suitable and set up for creating the actuating signals according to the second signal,
- wherein the means (11) for creating the actuating signals takes into account a derivative action (δ) depending on the radius of the curve driven through or to be driven through when creating the actuating signals.

2. Control device (10) according to Claim 1, **characterized in that** the means (11) for creating the actuating signals is suitable and set up for creating a first interim value (β) for the right hand headlamp (50) and a first interim value for the left hand headlamp (40) depending on the first signal.

3. Control device (10) according to Claim 2, **characterized in that** the means (11) for creating the actuating signals is suitable and set up for creating the actuating signals depending on the first interim values (β) and the derivative action (δ).

4. Control device (10) according to Claim 3, **characterized in that** the means (11) for creating the actuating signals is suitable and set up for adding the first interim value (β) and the derivative action (δ).

5. Control device (10) according to one of Claims 1 to 4, **characterized in that** the means (11) for creating the actuating signals determines the derivative action (δ) for the right or left hand headlamp (50 or 40, resp.) in the hollowing way:
- δ ∈ [0°, 2°] for R > 0 m (right-hand bend) and α > 0°,
- δ ∈ [-2°, 0°] for R < 0 m (left-hand bend) and α < 0° and
- δ = 0 in all other cases
wherein R is the bend radius determined by the second signal, α the object angle and δ the derivative action.

6. Procedure for controlling the vertical cut-off line of headlamp (40, 50) of a motor vehicle (F₁), especially by means of a fixture (10) according to one of Claims 1 to 5 wherein
- the control device (10), via a first input (12), reads a first signal indicating the direction relating to a longitudinal axis (I) of the motor vehicle (F₁), under which the motor vehicle (F₁) is approached by an oncoming light-source or this light-source moves in front of and away from the motor vehicle (F₁) in the same direction of travel,
- the means (11) for creating actuating signals for the control fixture (10) creates an actuating signal for the right hand headlamp (50) and an actuating signal for the left hand headlamp (40) of the vehicle depending on the first signal,
- by means of which the right hand vertical cut-off line is moved to avoid dazzling the oncoming vehicle or the vehicle moving in front (F₂) and
- by means of which the left hand vertical cut-off line may be moved to avoid dazzling the oncoming vehicle or the vehicle moving in front (F₂),
- wherein the control device (10), via a second input (13), reads a second signal indicating the radius of a curve already driven through by the motor vehicle (F₁) or to be driven through by the motor vehicle (F₁),
**characterized in**
- **that** the means (11) for creating the actuating signals also creates the actuating signals according to the second signal,
- wherein the means (11) for creating the actuating signals takes into account a derivative action (δ) depending on the radius of the curve driven through or to be driven through, when creating the actuating signals.

## Revendications

1. Dispositif (10) pour piloter la coupure clair-obscur verticale des projecteurs (40, 50) d'un véhicule automobile (F₁)
- le dispositif de pilotage (10) présentant une première entrée (12) pour un premier signal qui indique la direction relative à un axe longitudinal (I) du véhicule automobile dans laquelle une source de lumière d'un véhicule automobile (F₂) se déplace en sens inverse par rapport au véhicule automobile (F₁) ou se déplace devant le véhicule automobile (F₁) dans la même direction,
- le dispositif de pilotage (10) présentant un moyen (11) pour engendrer un signal de réglage pour le projecteur droit (50) et un signal de réglage pour le projecteur gauche (40) du véhicule automobile (F₁) pour régler la coupure clair-obscur verticale en fonction du premier signal,
- avec lequel la coupure verticale droite peut être déplacée pour le non-éblouissement d'un véhicule (F₂) en sens inverse ou qui précède,
- avec lequel la coupure verticale gauche peut être déplacée pour le non-éblouissement d'un véhicule (F₂) en sens inverse ou qui précède,
- le dispositif de pilotage (10) présentant une deuxième entrée (13) pour un deuxième signal qui indique le rayon d'un virage dans lequel le véhicule automobile passe ou passera,
**caractérisé en ce que**
- le moyen (11) pour engendrer les signaux de réglage pour régler la coupure clair-obscur verticale est approprié et configuré à engendrer les signaux de réglage en fonction du deuxième signal,
- le moyen (11) pour engendrer les signaux de réglage lors de l'engendrement des signaux de réglage prenant en compte un dosage de dérivation (δ) qui dépend du rayon de virage
dans lequel le véhicule passe ou passera.

2. Dispositif de pilotage (10) selon la revendication 1, **caractérisé en ce que** le moyen (11) pour engendrer les signaux de réglage est approprié et configuré à engendrer une première grandeur intermédiaire (β) pour le projecteur droit (50) et une première grandeur intermédiaire pour le projecteur gauche (40) en fonction du premier signal.

3. Dispositif de pilotage (10) selon la revendication 2, **caractérisé en ce que** le moyen (11) pour engendrer les signaux de réglage est approprié et configuré à engendrer les signaux de réglage en fonction de la première grandeur intermédiaire (β) et du dosage de dérivation (δ).

4. Dispositif de pilotage (10) selon la revendication 3, **caractérisé en ce que** le moyen (11) pour engendrer les signaux de réglage est approprié et configuré à additionner les premières grandeur intermédiaires (β) et le dosage de dérivation (δ).

5. Dispositif de pilotage (10) selon l'une des revendications 1 à 4, **caractérisé en ce que** le moyen (11) pour engendrer les signaux de réglage détermine le dosage de dérivation (δ) pour le projecteur droit respectivement gauche (50 resp. 40) de manière suivante :
- δ ε ]o°, 2°] pour R > 0 m (virage droit) et α > 0°
- δ ε [-2°, 0°] pour R < 0 m (virage gauche) et α < 0° et
- dans tous les autres cas δ =0
où R égal au rayon de virage indiqué par le deuxième signal et α égal à l'angle de l'objet et δ égal au dosage de dérivation.

6. Procédé pour piloter la coupure clair-obscur verticale pour projecteurs (40, 50) d'un véhicule automobile (F₁), surtout avec un dispositif (10) selon l'une des revendications 1 à 5,
- le dispositif de pilotage (10) lisant un premier signal à travers une première entrée (12) qui indique la direction relative à un axe longitudinal (I) du véhicule automobile (F₁) sous laquelle une source de lumière se déplace en sens inverse par rapport au véhicule automobile (F₁) ou se déplace devant le véhicule automobile (F₁) dans la même direction,
- un moyen (11) pour engendrer des signaux de réglage du dispositif de pilotage (10) engendrant un signal de réglage pour le projecteur droit (50) et un signal de réglage pour le projecteur gauche (40) du véhicule automobile en fonction du premier signal,
- avec lequel la coupure verticale droite peut être déplacée pour le non-éblouissement d'un véhicule (F₂) en sens inverse ou qui précède,
- avec lequel la coupure verticale gauche peut être déplacée pour le non-éblouissement d'un véhicule (F₂) en sens inverse ou qui précède,
- le dispositif de pilotage (10) lisant un deuxième signal à travers une deuxième entrée (13) qui indique le rayon d'un virage dans lequel le véhicule automobile (F₁) passe ou passera,
**caractérisé en ce que**
- le moyen (11) pour engendrer les signaux de réglage engendre les signaux de réglage également en fonction du deuxième signal,
- le moyen (11) pour engendrer les signaux de réglage lors de l'engendrement des signaux de réglage prenant en compte un dosage de dérivation (δ) qui dépend du rayon de virage dans lequel le véhicule passe ou passera.
